# EUROPEAN PATENT SPECIFICATION

(11) **EP 3 062 624 B1**
(45) Date of publication and mention of the grant of the patent: **29.08.2018**
(21) Application number: 14799228.3
(22) Date of filing: 28.10.2014
(51) Int. Cl.: A23B 7/14, A23B 7/16, H05H 1/24, A23L 3/01, A23B 7/015, A23B 7/154

(54) **PROCESS FOR THE TREATMENT OF FRUITS AND VEGETABLES.**
VERFAHREN ZUR BEHANDLUNG VON OBST UND GEMÜSE
PROCÉDÉ DE TRAITEMENT DE FRUITS ET LÉGUMES

(30) Priority: 30.10.2013 NL 2011708; 08.07.2014 NL 2013151
(43) Date of publication of application: 07.09.2016
(73) Proprietor: Hoefnagels, Johannes Adrianus Maria, 5076 AS Haaren (NL)
(72) Inventor: Hoefnagels, Johannes Adrianus Maria, 5076 AS Haaren (NL)
(74) Representative: V.O.
(86) International application number: PCT/NL2014/050744
(87) International publication number: WO 2015/065178

(56) References cited:
- WO-A1-2012/112042
- US-A1- 2013 189 156
- MISRA N N ET AL: "In-package nonthermal plasma degradation of pesticides on fresh produce", JOURNAL OF HAZARDOUS MATERIALS, vol. 271, 12 February 2014 (2014-02-12), pages 33-40, XP028841336, ISSN: 0304-3894, DOI: 10.1016/J.JHAZMAT.2014.02.005
- UTA SCHNABEL ET AL: "Decontamination of Microbiologically Contaminated Specimen by Direct and Indirect Plasma Treatment", PLASMA PROCESSES AND POLYMERS, vol. 9, no. 6, 4 October 2011 (2011-10-04) , pages 569-575, XP055151416, ISSN: 1612-8850, DOI: 10.1002/ppap.201100088

## Description

The present invention is directed to a process for the treatment of fruits and/or vegetables including but not limited to mushrooms, flowers, potatoes, onions, seeds, bulbs, tubers, and especially for the coating of pomes, such as apples and pears. Particularly, fruits and/or vegetables are treated with a physical treatment, optionally followed by another treatment. The terms "fruits" and "vegetables" are used in accordance with the present invention in broad sense and comprise all kinds of edible products of nature including fruits in the botanical sense, pomes, pseudo carps, tubers, bulbs, greens, cabbages *etc..*

In the trade of fruits and/or vegetables, for example in the trade of pomes, such as and preferentially apples and pears, the traders are continuously confronted with ever increasing demands. Such demands relate to or are associated with storage lifetime, or shelf life, amounts of residues, and especially residues from conserving agents, pesticides, fungicides and so on; and with pricing.

For example, it is known from NL-1031774, NL-2001567 and EP-A-1 854 360 to apply a coating containing carboxy methyl cellulose and sucrose esters or fructose esters of fatty acids to (the skin of) fruits and/or vegetables to increase the shelf life and the display shelf life. Particularly, fruits and/or vegetables that have been stored in cooling units, for instance in controlled atmosphere cooling units, may be, after optionally being washed with water, dipped in or otherwise coated with said coating composition. In specific embodiments this coating process is followed by a drying step.

Further, it is well-known and rather common practice to spray or otherwise apply pesticides and fungicides to growing fruits and/or vegetables. The fruits and/or vegetables treated with these compounds may or may not after harvesting be washed or otherwise be subjected to a treatment to reduce or remove the amounts of these compounds and/or the residues thereof.

Moreover, it is well-known that fruits and/or vegetables before or after harvesting are either physically and/or chemically treated to avoid or reduce quality loss by micro organisms, insects and other organisms. Such physical and chemical treatments can for instance be cooling, optionally in a controlled atmosphere, e.g. in a low oxygen atmosphere; treating with pesticides or fungicides or bactericides. It is, *e.g.,* known to spray the product Bellis® (*ex* BASF) or Switch® (*ex* Syngenta) before harvesting on fruit to protect it during storage against rotting or microbial decay. Of course it is also possible that such treatments are combined.

It is an aim of the present invention to provide a method to improve the effect of coating materials on the surface of fruits and/or vegetables. This may for example occur by providing steps providing a better adherence of the coating materials to the surface of the fruits and/or vegetables, or to effect a better, more complete coverage of the coating material over the surface of the fruits and vegetables treated.

It is a further or other aim to reduce microbial contamination on (the surface of) fruits and/or vegetables.

Yet a further or other aim is to reduce the amount of (residues of) pesticides, fungicides, bactericides or other conserving agents on the surface of fruits and/or vegetables. In this light, it is noted that consumers, consumer organizations, governmental institutions, supermarket chains and other entities have continuously sharper demands in respect of the presence of residues on fruits and vegetables. Growers have the option not to use biocides *etc.* in the growing of their products, but this immediately has a downside in respect of yield and pricing. In practice, most growers still use chemicals to increase the product yield per acre. This makes that a need exists to degrade or otherwise reduce the residues of the chemicals used on the fruits and vegetables.

A further or other aim of the invention is to reduce the use of pesticides, microbicides and fungicides in general on fruits and/or vegetables. This may lead to a considerable costs saving, since the chemicals presently used for these functions are expensive either in price or in amount. Moreover, if such materials do not need to be used or are less frequently used, a considerable amount of labour can be reduced.

A further aim of the invention is to provide a method that does not unnecessarily increase the handling costs in the sorting, washing and/or coating of fruits.

It has now been found that one or more and preferably all of the sketched aims may be achieved by subjecting the fruits and/or vegetables to a specific so-called "cold atmospheric plasma" treatment, followed by applying a coating. With cold atmospheric plasma, it is meant a plasma generated at about ambient conditions, wherein "cold" generally does not encompass temperatures higher than 60°C, preferably not higher than 40°C.

In a first aspect, the present invention relates to a method for improving the adherence and/or completeness of a coating, wherein in step (a) the outer surface of a piece of fruit or vegetable is subjected to cold atmospheric plasma using a surface dielectric barrier discharge plasma unit; followed by applying a coating to the piece of fruit or vegetable.

Incidentally, in the Report titled "Geïnduceerde afbraak residuen op fruit; Nieuwe Technieken 2011; Eindrapportage" (in translation: Induced degradation residues on fruit; New techniques 2011; Final Report), S. Bastiaan-Net and D. Somhorst; Wageningen UR Food & Biobased Research; ISBN No. 978-94-6173-257-6; January 15, 2012, the authors conclude that "the cold plasma technique appears not suitable to reduce effectively the level of plant protection products on pomes". The report is not very detailed on which technique was explicitly used, except than that apples are treated by cold plasma, being a kind of purple flame (≈40°C) (nitrogen gas gives free nitrogen radicals when subjected to an electric pulse). Particularly, each apple was "contacted" with the cold plasma 6 times: the stalk part, the crown part and the body part in 4 sections, each for 40 seconds. The technique used was seen as laborious and not suitable for treatment of bulk products. It is believed in accordance with the hypotheses behind the present invention that the technique used or studied by these authors uses non-uniform plasma.

WO 2012/112042 discloses a device for disinfecting plant seeds, using a surface dielectric barrier discharge unit generating a cold atmospheric plasma.

Schnabel et al. describe in an article in Plasma Processes and Polymers, vol. 9 (6) (2011), 569-575 that fresh fruits and vegetables may be microbiologically decontaminated by direct and indirect plasma treatment.

US 2013/0189156 A1 relates to a system and method for decontamination of a food product or medical device by placing it in a closed dielectric container with a working gas, and producing a controlled electrical discharge.

In accordance with the present invention, the specific cold atmospheric plasma treatment may be carried out using a surface dielectric barrier discharge (SDBD) plasma unit. Such units generate at normal air pressure a cold plasma that transport plasma radicals to a surface to be treated.

One suitable surface dielectric barrier discharge plasma unit is described in all detail in WO 2008/082297. This document teaches a surface dielectric barrier discharge plasma unit comprising a solid dielectric structure provided with an interior space wherein an interior electrode is arranged, further comprising a further electrode for generating in concert with the interior electrode a surface dielectric barrier discharge plasma, wherein the plasma unit is further provided with a gas flow path along a surface of the structure.

Also in EP-A-2 105 042, a suitable surface dielectric barrier discharge plasma unit is described.

However, also other plasma units capable of producing a homogenous plasma may be used. For example, apparatuses using a plasma jet or having a plate form or other specific form compatible with or destined for a specific aim may be used. The plasma unit may be positioned around the object to be treated, above or below such object or in all other positions relative to such object. Moreover, the unit may be developed such that at the same time various objects and packages are subjected to the plasma stream. In addition, a number of units can be used at the same time.

Both apparatuses are useful in respect of the present invention. The apparatuses described in both patent applications are incorporated in the present application by reference.

To overcome the problem that plasma treatments are non-uniform, especially when treating structures having low or non-gas permeable materials, the surface dielectric barrier discharge plasma unit to be used according to the present invention has its gas flow path oriented substantially transverse with respect to a treating surface of the solid dielectric structure.

By orienting the gas flow path substantially transverse with respect to a treating surface of the structure, *e.g*. through or along a side surface of the solid dielectric structure, a desired plasma treating area near the treating surface of the structure can be reached directly by the gas flow. Accordingly, a gas flow path section upstream to the desired area but located in a plasma zone is reduced and the gas can be provided more evenly in the entire plasma region, so that a more uniform plasma process is enabled. Further, the gas particles are processed more efficiently.

Said in other words, a plasma is created by jetting via a gas stream plasma radicals to the surface of a piece of fruit or vegetable, where these radicals will have a uniform, local disinfecting or activating effect as described in more detail herein-below.

The present invention relates to a method improving the adherence and/or completeness of a coating, wherein step (a) is followed by applying a coating to the piece of fruit or vegetable. This coating step is a conventional coating step and can for instance be the method described in the above-cited NL-1031774, NL-2001567 and EP-A-1 854 360.

It was found in the present invention that the shelf life of fruit and vegetables can be increased by first subjecting a piece of fruit or vegetable to step (a) of the present invention and then apply a coating known *per se.* These coatings are generally oxygen barrier coatings and were found to better adhere to the surface (often having a low surface tension), or at least to more homogeneously cover the surface of fruits and vegetables treated with the cold plasma step.

This is illustrated in Example 1 and Figures 3.1-3.4 described in detail herein-below, which show that when pieces of fruit or vegetables are first treated with cold plasma in accordance with the present invention these pieces are better, more completely and more homogeneously coated by a coating composition. Without wishing to be bound to any theory, it is hypothesized that the cold plasma treatment increases the surface tension of the skin of the fruit or vegetable. This effect is even reached on rough areas or areas suffering from mechanical damage.

The method of the present invention also reduces microbial, bactericidal or fungicidal contamination.

It is noted in this respect that on the surface of fruit and vegetables all kinds of microorganisms are present. On the basis of tests, the results thereof being shown herein-below in Example 2, using test organisms *Escherichia coli* representing bacteria and especially Gram negative bacteria, and *Penicillium expansum* representing fungi, it is shown that considerable reductions in the amounts of bacteria and fungi can be obtained. That is, the method of the present invention is capable of disinfecting fruits and vegetables to an important degree.

It was found that by using a plasma treatment of up to 20 seconds, such as 0.1-15 seconds, preferably 1-14 seconds, more preferably 2-12 seconds, this plasma treatment is capable to reduce the number of microorganisms (bacteria and fungi) to 1-2% of the original contamination.

In addition, the amount of residues of pesticides, fungicides, bactericides and other biocides was found to be reduced considerably.

In a preferred embodiment, the pieces of fruits and vegetables to be treated are moist or a bit wet. Then, the effectivity of the cold plasma was found to in crease to some extent. Also, the effect of the plasma can be amplified through use of suitable gases or mixtures thereof such as the use of H₂O₂ or solutions or mixtures containing it.

In some embodiments, the pieces of fruits and vegetables can be treated while being packaged in a (one layer) packaging material.

The treatment under the plasma unit is best carried out when the piece of fruit or vegetable is rotating. Unfortunately, rotation is not always possible. This rotation can be stepwise using one area of plasma treatment, but also continuously using a longer field of plasma treatment. Preferably, the plasma unit is integrated in a professional fruit or vegetable transport line, wherein conventional roller belts are present.

The present invention will now be further elaborated while referring to the Figures, wherein:
Fig. 1 shows a schematic side view of a surface dielectric barrier discharge plasma unit; and
Fig. 2 shows schematic perspective view of a treatment device.

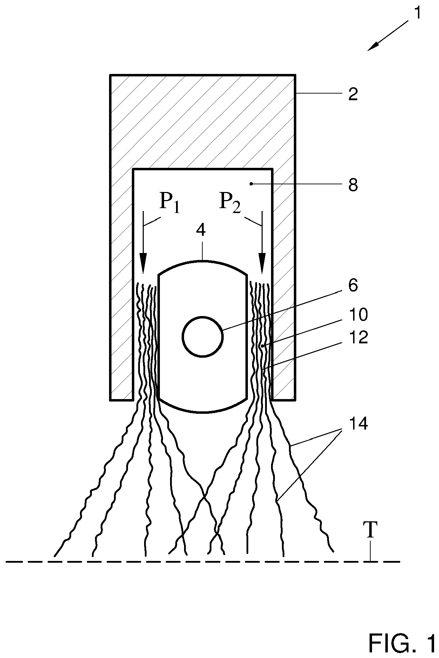

Fig. 1 shows a side view of a suitable surface dielectric barrier discharge plasma unit 1 for performing a cold atmospheric plasma treatment. The unit 1 includes an exterior grounding electrode 2, and a solid dielectric structure 4. The solid dielectric structure 4 includes an interior electrode 6, formed by an electrolyte, thus facilitating, apart from the electric functionality, a temperature conditioning means. The solid dielectric structure element 4 can be cooled. The electrolyte can be formed by a liquid and/or a gas. A gas flow is initiated in the area 8 above the solid dielectric structure 4. In Fig. 1, the gas flow is indicated by arrows P1 and P2, and is substantially transverse with respect to the treating surface T.

In a space 10, between the grounding electrode 2 and the solid dielectric structure 4, surface dielectric barrier discharge plasma 12 is formed. As the plasma 12 exits the unit 1, it forms a plasma jet of cold atmospheric plasma indicated by reference numeral 14. The plasma jet can be used to treat a piece of fruit or vegetable with cold atmospheric plasma.

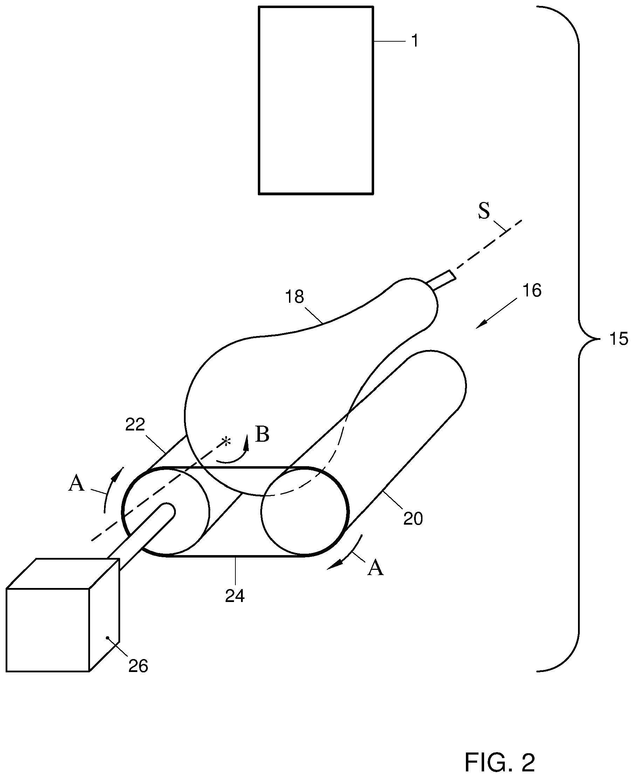

Fig. 2 depicts a schematic perspective view of a treatment device 15. The treatment device includes a rotation unit 16 arranged for rotating a piece of fruit or vegetable about an axis S extending through the piece of fruit or vegetable and a surface dielectric barrier discharge plasma unit 1. It is convenient to choose the axis to be a central axis of the piece of fruit or vegetable. Generally, the central axis extends along a stem of the piece of fruit or vegetable and through a heart of the piece of fruit or vegetable.

In this example, the rotation unit includes a first roller 20 and a second roller 22 each having an soft outer surface in order to prevent damage to the piece of fruit or vegetable, for example a pear 18, being rotated. The rotation unit 16 further includes a gear transmission element 24 such as a belt or chain. A driving member 26 is provided and is arranged for rotating at least one of the first roller 20 and the second roller 22. In this example, the driving member 26 rotates, in use, the second roller 22 and the first roller 22 is rotated by the gear transmission element 24.

When the second roller 22 is rotated in a direction A the first roller 20 is also rotated in the direction A. This results in the pear 18, being rotated in an opposite direction B about the central axis S extending through the pear 18. The soft surface of the rollers 20, 22 helps grip and rotate the pear 18. It is noted that in this example, the gear transmission element 24 causes the first roller 20 to be rotated. However, it is conceivable that only one roller is rotated and that the other roller is free to rotate. In this way, the other roller is rotated by the pear 18.

The surface dielectric barrier discharge plasma unit 1 and the rotation unit are mounted to a frame, not pictured but conventional, such that, in use, the piece of fruit or vegetable, pear 18, when rotated is subjected to cold atmospheric plasma generated by the surface dielectric barrier discharge plasma unit 1. In this example, the unit 1 provides a plasma jet for 10 seconds at a distance of approximately 1.5 cm from the pear 18. During the application of cold atmospheric plasma the pear 18 is rotated such that all sides are subjected to the surface plasma. This has been found to treat the pear 18 uniformly. It will be appreciated that the treatment device 15 may be included in a conveyor system for processing and handling pieces of fruit and or vegetables.

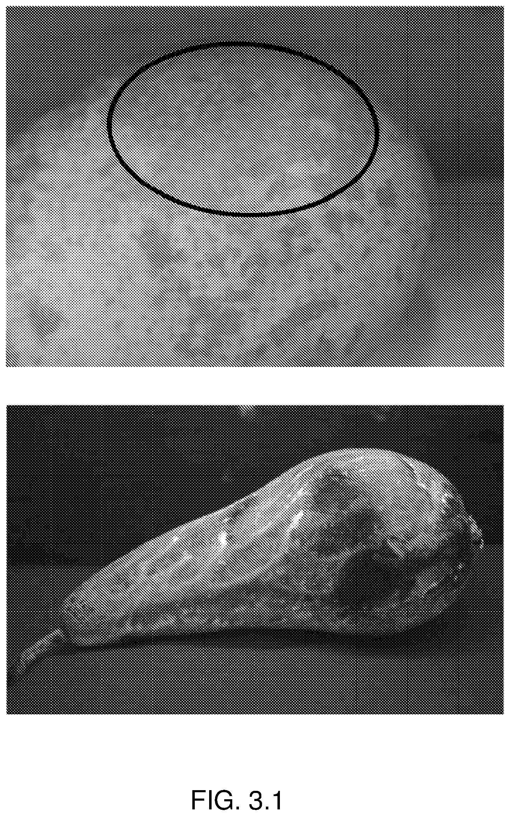

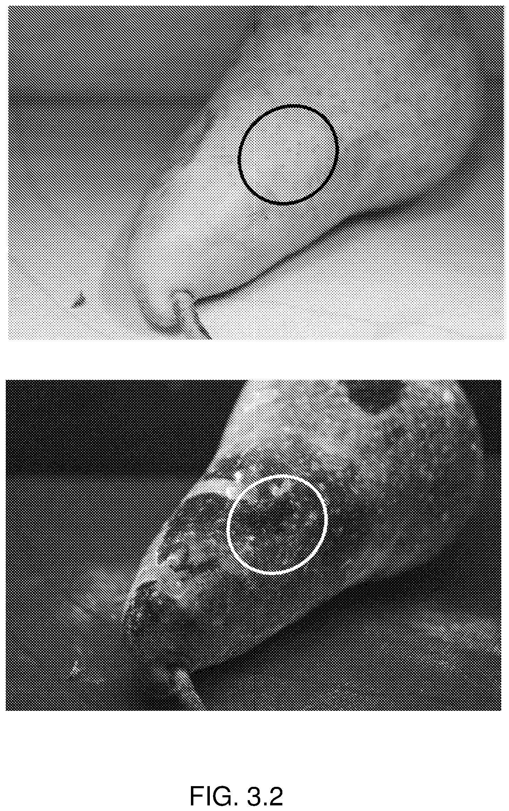

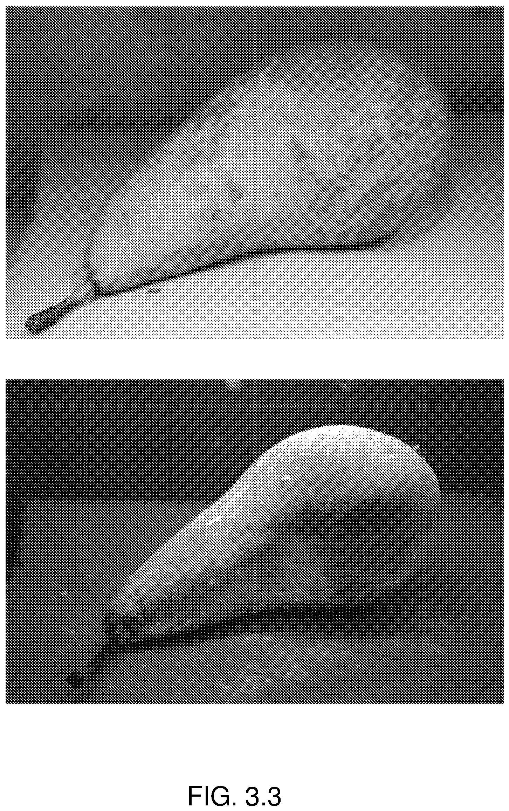

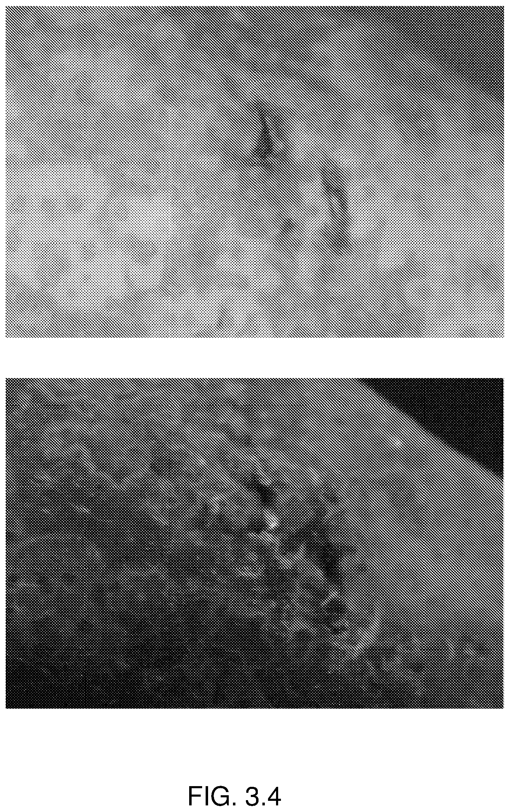

Fig. 3 shows in Figs. 3.1 and 3.2 photographs (without and with UV lightening) of a pear coated with a coating composition; in Fig. 3.3 photographs of a pear treated with cold plasma in accordance with the present invention followed by a coating step; and in Fig. 3.4 photographs like those in Fig. 3.3, but now on a pear having mechanical damage.

The present invention will be further elaborated while referring to the following, non-limiting examples. If percentages are mentioned in these examples and the other parts of the description, these percentages are weight percentages drawn to the weight of the total composition, unless otherwise indicated.

### Example 1

Pears (Conference) were treated on a line depicted in Fig. 2 using the following plasma conditions: atmosphere: air; plasma power: 250 W; total treatment time per pear: 50 sec; distance of plasma jet to pear surface: 1.5-4 cm (due to form of pear).

After this plasma treatment, the pears were coated by dipping of the pears in an aqueous composition containing 1.5% Bio-Fresh™ (*ex* De Leye Agro B.V., Rotterdam, The Netherlands) and a UV fluorescing substance (*ex* Tuhamij, 's-Gravenzande, The Netherlands). After drying, the homogeneity of the coating was checked under a UV lamp.

In Figures 3.1-3.4, the results are shown, wherein in Fig. 3.1 an untreated pear is shown, in Fig. 3.2 a pear only subjected to a coating with the Bio-Fresh composition used, and in Figs. 3.3 and 3.4 pears subjected to a cold plasma treatment and a coating step in accordance with the present invention. One can see from Figs. 3.1 and 3.2, that in pears not treated with cold plasma, the coating is not fully covering the pears. In Fig. 3.2, it can be seen that even unexpected parts of the pear are not coated.

Figs. 3.3 and 3.4 show that pears treated in accordance with the present invention have a homogeneous coating, even at spots resulting from mechanical damage.

### Example 2 (not according to the invention)

In order to investigate the effect of the cold plasma treatment, pears were artificially contaminated with a higher number of microorganisms (*E. coli* and *P. expansum*) on their surface as compared to natural reality. Thereto, the pears were immersed in a bacterial or mould spore suspension holding 10⁷ microorganisms or mould spores per ml peptone physiological salt; for the controls the pears were immersed in peptone physiological salt solution without microorganisms/spores. After the immersion, the pears were dried for 1 hour at ambient conditions; after half an hour the pears were turned. This artificial contamination allowed a better comparison and made higher log reductions determinable.

A batch of 60 pears was treated under a cold plasma unit (330 W). The treatment length was 30 cm; the distance of the plasma unit to the part of the pears having the highest diameter was about 10 cm. The plasma conditions, treatments times and combinations with either a contact with a water or aqueous hydrogen peroxide solution bath (after the plasma treatment) are given in Table 1, together with the results.

After the plasma treatment, the pears are cut in two parts and mixed into 100 ml peptone fysiological salt, containing 0.1% Tween, using a sterile stomacher bag. The mixture was shaken for 1 minute using a pulsifier to bring the present bacteria in suspension. This suspension is used to make a dilution series. Dilutions coming from the *E. coli* embodiments are mixed with Violet Red Bile Lactose agar and incubated at 30°C for two days; dilutions coming from the *P. expansum* were mixed with Oxitetracyclin Glucose Yeast agar and incubated at 25°C for 3-5 days or until colonies were visible. The colonies were counted.

**TABLE 1**

| **Sample** | **Micro organism** | | **Plasma conditions** | | |
|---|---|---|---|---|---|
| | *E. coli* | *P. expansum* | treatmentting in seconds | bath + duration | log reduction |
| control | - | - | 0 | - | - |
| positive control | + | - | 0 | - | - |
| H₂O/H₂O₂ ref | + | - | 0 | H₂O/H₂O₂, 5 sec | 3.17 |
| H₂O ref | + | - | 0 | H₂O, 5 sec | 0.40 |
| | + | - | 90 | H₂O/H₂O₂ | 5.60 |
| | + | - | 90 | H₂O | 4.58 |
| positive control | - | + | 0 | - | - |
| H₂O/H₂O₂ ref | - | + | 0 | H₂O/H₂O₂, 5 sec | 1.00 |
| H₂O, ref | - | + | 0 | H₂O, 5 sec | 1.03 |
| | - | + | 90 | H₂O/H₂O₂ | 2.97 |
| | - | + | 90 | H₂O | 1.44 |

It can be seen that the plasma treatment results in a log reductions between 1.5 and 5.6 on *E. coli* and *P. expansum.*

## Claims

1. A method for improving the adherence and/or completeness of a coating, wherein in step (a) the outer surface of a piece of fruit or vegetable is subjected to cold atmospheric plasma using a surface dielectric barrier discharge plasma unit; followed by applying a coating to the piece of fruit or vegetable.

2. The method of claim 1, wherein the coating is a coating containing carboxy methyl cellulose and sucrose esters or fructose esters of fatty acids.

3. The method of claim 1 or claim 2, for reducing microbial, bactericidal or fungicidal contamination.

4. The method of claim 3, wherein the treatment with plasma is carried out for 5-15 seconds, preferably for 8-12 seconds.

5. The method of any of the preceding claims, wherein a piece of fruit or vegetable is rotated under said plasma unit.

6. The method of any one of the previous claims, using a plasma power of 200-400 W.

7. The process of any one of the previous claims, using a plasma treatment of less than 10 seconds.

## Patentansprüche

1. Verfahren zur Verbesserung des Anhaftens und/oder der Vollständigkeit einer Beschichtung, wobei in Schritt (a) die äußere Oberfläche eines Stücks Frucht oder Gemüses kaltem atmosphärischen Plasma ausgesetzt wird, unter Verwendung einer Oberflächen-dielektrischen Barriere-Entladungs-PlasmaEinheit; gefolgt von Aufbringen einer Beschichtung auf das Stück Frucht oder Gemüse.

2. Verfahren nach Anspruch 1, wobei die Beschichtung eine Beschichtung ist, enthaltend Carboxymethylcellulose und Sucroseester oder Fructoseester von Fettsäuren.

3. Verfahren nach Anspruch 1 oder Anspruch 2 zum Reduzieren mikrobieller, bakterizider oder fungizider Kontamination.

4. Verfahren nach Anspruch 3, wobei die Behandlung mit Plasma für 5-15 Sekunden ausgeführt wird, bevorzugt für 8-12 Sekunden.

5. Verfahren nach einem der vorhergehenden Ansprüche, wobei ein Stück Frucht oder Gemüse unter der Plasmaeinheit gedreht wird.

6. Verfahren nach einem der vorhergehenden Ansprüche, unter Verwendung einer Plasmaleistung von 200-400 W.

7. Verfahren nach einem der vorhergehenden Ansprüche, unter Verwendung einer Plasmabehandlung von weniger als 10 Sekunden.

## Revendications

1. Procédé d'amélioration de l'adhérence et/ou de l'intégrité d'un revêtement, dans lequel, à l'étape (a), la surface extérieure d'un fruit ou d'un légume est soumise à un plasma atmosphérique froid à l'aide d'une unité de plasma de décharge à barrière diélectrique de surface ; suivi par l'application d'un revêtement sur le fruit ou le légume.

2. Procédé selon la revendication 1, dans lequel le revêtement est un revêtement qui contient de la carboxyméthylcellulose et des esters de saccharose ou des esters de fructose d'acides gras.

3. Procédé selon la revendication 1 ou 2, destiné à réduire une contamination microbienne, bactéricide ou fongicide.

4. Procédé selon la revendication 3, dans lequel le traitement avec un plasma est effectué pendant 5 à 15 secondes, de préférence pendant 8 à 12 secondes.

5. Procédé selon l'une quelconque des revendications précédentes, dans lequel un fruit ou un légume est tourné sous ladite unité de plasma.

6. Procédé selon l'une quelconque des revendications précédentes, qui utilise une puissance de plasma de 200 à 400 W.

7. Procédé selon l'une quelconque des revendications précédentes, qui utilise un traitement par plasma de moins de 10 secondes.
